(19) Europäisches Patentamt
European Patent Office
Office européen des brevets

(11) **EP 4 769 680 A1**

(12) **EUROPEAN PATENT APPLICATION**

(43) Date of publication:
**01.07.2026 Bulletin 2026/27**

(21) Application number: **25215906.6**

(22) Date of filing: **14.11.2025**

(51) International Patent Classification (IPC):
*H01M 50/103* (2021.01)    *H01M 50/15* (2021.01)
*H01M 50/176* (2021.01)    *H01M 50/188* (2021.01)
*H01M 50/553* (2021.01)

(52) Cooperative Patent Classification (CPC):
H01M 50/103; H01M 50/15; H01M 50/176;
H01M 50/188; H01M 50/553

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.12.2024 CN 202411942012**

(71) Applicant: **Hithium Tech HK Limited
Kowloon, Hong Kong (HK)**

(72) Inventors:
• **FU, Yunfeng**
  **Xiamen, 361100 (CN)**
• **XIAO, Hepan**
  **Xiamen, 361100 (CN)**
• **GAO, Yinghao**
  **Xiamen, 361100 (CN)**
• **JIN, Dongming**
  **Xiamen, 361100 (CN)**

(74) Representative: **Mewburn Ellis LLP
Aurora Building
Counterslip
Bristol BS1 6BX (GB)**

(54) **END COVER ASSEMBLY, BATTERY CELL, AND ENERGY-STORAGE APPARATUS**

(57) An end cover assembly (100), a battery cell (200), and an energy-storage apparatus (300) are provided. The end cover assembly (100) includes an upper cover (10), an upper plastic member (20), a terminal post (30), and a supporting member (40). The upper cover (10) has a first surface (11) and a second surface (12). The upper cover (10) further defines a through hole (13). The upper plastic member (20) partially passing through the through hole (13). The upper plastic member (20) defines a penetrating hole (21) and a mounting hole (22), and the upper plastic member (20) has a first orthographic projection on the first surface (11). The terminal post (30) includes a flange portion (31) and a penetrating portion (32). The flange portion (31) has a second orthographic projection on the first surface (11). The supporting member (40) has a third orthographic projection on the first surface (11). The third orthographic projection partially overlaps with the first orthographic projection and partially overlaps with the second orthographic projection.

FIG. 1

**Description**

TECHNICAL FIELD

This disclosure relates to the field of energy storage technology, and particularly, to an end cover assembly, a battery cell, and an energy-storage apparatus.

BACKGROUND

An end cover assembly of a battery cell requires an upper plastic member to insulate each of a terminal post and a pressure ring from an upper cover. In addition, a sealing ring is required to be disposed between the upper cover and the terminal post, and the sealing ring is compressed through a cooperation of the upper plastic member, the terminal post, the pressure ring, and the upper cover, to avoid a liquid leakage (i.e., electrolyte leakage) of the battery cell. However, a material of the upper plastic member is resin. When the battery cell undergoes a thermal runaway, a temperature of the battery cell rises, which may easily cause the upper plastic member to melt. The terminal post is prone to sink and retract into the upper plastic member, thereby reducing a compressed extent of the sealing ring, making the battery cell prone to electrolyte leakage, and degrading a safety performance of the battery cell.

SUMMARY

In a first aspect of embodiments of the present disclosure, an end cover assembly is provided. The end cover assembly includes an upper cover, an upper plastic member, a terminal post, and a supporting member. The upper cover has a first surface and a second surface disposed opposite to each other in a thickness direction of the upper cover. The upper cover further defines a through hole, and the through hole extends through the first surface and the second surface. The upper plastic member is disposed on a side of the first surface of the upper cover and partially passes through the through hole. The upper plastic member defines a penetrating hole and a mounting hole spaced apart from each other, and the upper plastic member has a first orthographic projection on the first surface. The terminal post includes a flange portion and a penetrating portion connected to each other. The flange portion is located on one side of the upper plastic member facing away from the upper cover and abuts against the upper plastic member. The penetrating portion protrudes from one side of the flange portion facing towards the first surface and passes through the penetrating hole. The flange portion has a second orthographic projection on the first surface. The supporting member passes through the mounting hole. In an arrangement direction of the first surface and the second surface, the supporting member is disposed between the flange portion and the upper cover. The supporting member has a third orthographic projection on the first surface. The third orthographic projection partially overlaps with the first orthographic projection and partially overlaps with the second orthographic projection.

In a second aspect of embodiments of the present disclosure, a battery cell is provided. The battery cell includes a housing, an end cover assembly, and an electrode assembly. The end cover assembly includes an upper cover, an upper plastic member, a terminal post, and a supporting member. The upper cover has a first surface and a second surface disposed opposite to each other in a thickness direction of the upper cover. The upper cover further defines a through hole, and the through hole extends through the first surface and the second surface. The upper plastic member is disposed on a side of the first surface of the upper cover and partially passes through the through hole. The upper plastic member defines a penetrating hole and a mounting hole spaced apart from each other, and the upper plastic member has a first orthographic projection on the first surface. The terminal post includes a flange portion and a penetrating portion connected to each other. The flange portion is located on one side of the upper plastic member facing away from the upper cover and abuts against the upper plastic member. The penetrating portion protrudes from one side of the flange portion facing towards the first surface and passes through the penetrating hole. The flange portion has a second orthographic projection on the first surface. The supporting member passes through the mounting hole. In an arrangement direction of the first surface and the second surface, the supporting member is disposed between the flange portion and the upper cover. The supporting member has a third orthographic projection on the first surface. The third orthographic projection partially overlaps with the first orthographic projection and partially overlaps with the second orthographic projection. The end cover assembly and the housing cooperatively define a containing cavity. The electrode assembly is disposed in the containing cavity. The electrode assembly is electrically connected to the terminal post of the end cover assembly.

In a third aspect of embodiments of the present disclosure, an energy-storage apparatus is provided. The energy-storage apparatus includes a box defining an accommodating cavity and multiple battery cells. The multiple battery cells are accommodated in the accommodating cavity. Each battery cell includes a housing, an end cover assembly, and an electrode assembly. The end cover assembly includes an upper cover, an upper plastic member, a terminal post, and a supporting member. The upper cover has a first surface and a second surface disposed opposite to each other in a thickness direction of the upper cover. The upper cover further defines a through hole, and the through hole extends through the first surface and the second surface. The upper plastic member is disposed on a side of the first surface of the upper cover and partially passes through the through hole. The upper plastic member defines a penetrating hole and a mounting hole spaced apart from each other, and the upper plastic member has a first orthographic projection on the first surface. The terminal post includes a flange portion and a penetrating portion connected to each other. The flange portion is located on one side of the upper plastic member facing away from the upper cover and abuts against the upper plastic member. The penetrating portion protrudes from one side of the flange portion facing towards the first surface and passes through the penetrating hole. The flange portion has a second orthographic projection on the first surface. The supporting member passes through the mounting hole. In an arrangement direction of the first surface and the second surface, the supporting member is disposed between the flange portion and the upper cover. The supporting member has a third orthographic projection on the first surface. The third orthographic projection partially overlaps with the first orthographic projection and partially overlaps with the second orthographic projection. The end cover assembly and the housing cooperatively define a containing cavity. The electrode assembly is disposed in the containing cavity. The electrode assembly is electrically connected to the terminal post of the end cover assembly.

The end cover assembly in embodiments of the present disclosure includes the upper cover, the upper plastic member, the terminal post, and the supporting member. The upper cover defines the through hole. The upper plastic member is disposed on the side of the first surface of the upper cover and partially passes through the through hole. The upper plastic member defines the penetrating hole and the mounting hole spaced apart from each other. The terminal post includes the flange portion and the penetrating portion connected to each other. The flange portion is located on one side of the upper plastic member facing away from the upper cover and abuts against the upper plastic member. The penetrating portion protrudes from one side of the flange portion facing towards the first surface, and the penetrating portion passes through the penetrating hole. The supporting member passes through the mounting hole. In this embodiment, when the battery cell undergoes a thermal runaway or during an assembly of the end cover assembly, a temperature of the terminal post rises, which may cause the upper plastic member to melt. A rebound force generated by a sealing ring will be released, and the terminal post will sink (i.e., the flange portion moves towards the upper cover). By providing the supporting member in the upper plastic member, when the terminal post sinks for a certain distance, the supporting member will abut against and support the flange portion, so as to prevent the terminal post from further sinking and to restrain the rebound force generated by the sealing ring from a full release, therefore a liquid leakage of the battery cell is better avoided, and a safety of using the battery cell is improved. In addition, the upper plastic member in embodiments of the present disclosure has the first orthographic projection on the first surface, the flange portion has the second orthographic projection on the first surface, the supporting member has the third orthographic projection on the first surface, and the third orthographic projection partially overlaps with the first orthographic projection and partially overlaps with the second orthographic projection. The third orthographic projection partially overlaps with the second orthographic projection, enabling the supporting member to well support the flange portion when a temperature inside the battery cell rises. At the same time, the third orthographic projection partially overlaps with the first orthographic projection, which means that the supporting member is assembled to the upper plastic member, creating an overlapping part of the upper plastic member and the supporting member to support the supporting member. When an assembly of the supporting member and the upper plastic member is transferred to a next station, the supporting member is better prevented from detaching from the upper plastic member, and assembly yields of the upper plastic member and the supporting member are increased, therefore a safety performance of the battery cell is improved.

BRIEF DESCRIPTION OF THE DRAWINGS

The technical solutions in the embodiments of the present disclosure is described clearly from the following brief introduction on the accompanying drawings required for describing the embodiments. Obviously, the accompanying drawings in the following description show merely some embodiments of the present disclosure, and those of ordinary skill in the art may still derive other drawings from these accompanying drawings without creative efforts.

FIG. 1 is a schematic structural view of an energy-storage apparatus according to an embodiment of the present disclosure.
FIG. 2 is a schematic structural view of a battery cell according to an embodiment of the present disclosure.
FIG. 3 is a cross-sectional structural view of the battery cell taken in an A-A direction in FIG. 2 according to an embodiment of the present disclosure.
FIG. 4 is a schematic structural view of an end cover assembly according to an embodiment of the present disclosure.
FIG. 5 is an exploded structural view of an end cover assembly provided by an embodiment of the present disclosure.
FIG. 6 is an exploded structural view of an end cover assembly viewed from another perspective according to an embodiment of the present disclosure.
FIG. 7 is a schematic structural view of a terminal post according to an embodiment of the present disclosure.
FIG. 8 is a planar structural view of an end cover assembly according to an embodiment of the present disclosure.

FIG. 9 is a cross-sectional structural view of the end cover assembly taken in a B-B direction in FIG. 8 according to an embodiment of the present disclosure.

FIG. 10 is an enlarged view at a dashed block I in FIG. 9.

FIG. 11 is a cross-sectional structural view of an assembly of an upper plastic member, a terminal post, and a supporting member according to an embodiment of the present disclosure.

FIG. 12 is a planar perspective structural view of an upper plastic member and a supporting member after assembly according to an embodiment of the present disclosure.

FIG. 13 is a cross-sectional structural view of an assembly of an upper plastic member, a terminal post, and a supporting member according to another embodiment of the present disclosure.

FIG. 14 is a partial cross-sectional structural view of an assembly of an upper plastic member, a terminal post, a supporting member, and an upper cover according to an embodiment of the present disclosure.

FIG. 15 is a partial cross-sectional structural view of an assembly of an upper plastic member, a terminal post, a supporting member, and an upper cover according to another embodiment of the present disclosure.

Description of reference signs of the accompanying drawings:

300 - energy-storage apparatus; 310 - box; 311 - accommodating cavity; 200 - battery cell; 210 - housing; 230 - containing cavity; 240 - electrode assembly; 241 - positive electrode; 242 - separator; 243 - negative electrode; 100 - end cover assembly; 10 - upper cover; 11 - first surface; 12 - second surface; 13 - through hole; 14 - recess; 20 - upper plastic member; 21 - penetrating hole; 22 - mounting hole; 221 - first wall surface; 222 - first arc surface; 223 - second wall surface; 224 - second arc surface; 23 - first plastic portion; 24 - second plastic portion; 25 - third plastic portion; 26 - recessed grove; 27 - stepped surface; 30 - terminal post; 30a - positive terminal post; 30b - negative terminal post; 31 - flange portion; 32 - penetrating portion; 40 - supporting member; 41 - first supporting portion; 42 - second supporting portion; 50 - sealing ring; 60 - pressure ring; 70 - lower plastic member; 80 - upper patch.

DETAILED DESCRIPTION

To enable those skilled in the art to better understand solutions of the present disclosure, in the following, technical solutions in embodiments of the present disclosure will be clearly and completely described in conjunction with the accompanying drawings in the embodiments of the present disclosure. Obviously, the described embodiments are merely a part rather than all of the embodiments of the present disclosure. All other embodiments obtained by a person of ordinary skill in the art based on the embodiments of the present disclosure without creative efforts shall belong to the scope of protection of the present disclosure.

The terms "first", "second", and the like in the description, the claims, and the accompanying drawings of the present disclosure are used for distinguishing different objects, rather than for describing a specific order. Furthermore, the terms "include", "have", and any variations thereof are intended to cover exclusive inclusions. For example, a process, a method, a system, a product or an apparatus that includes a series of steps or units is not limited to the listed steps or units, but optionally further includes the steps or units not listed, or optionally further includes other steps or units inherent to the process, the method, the product or the apparatus.

The following describes the technical solutions in the embodiments of the present disclosure in conjunction with the accompanying drawings.

It may be noted that, for convenience of description, in the embodiments of the present disclosure, the same reference signs denote the same components, and for brevity, in different embodiments, detailed description of the same components is omitted.

At present, generation of green electric energy is generally dependent on photovoltaics, wind power, water potential, etc. However, wind energy, solar energy, and the like are strongly intermittency and volatile, resulting in an unstable power grid, insufficient power supply at a power consumption peak, and excessive power supply at a power consumption valley. In addition, an unstable voltage may further damage electric power. Therefore, issues such as "curtailment of wind and photovoltaics" may occur due to insufficient power demand or insufficient power-grid capacity, and energy storage is required to solve these problems. That is, electric energy is stored by converting it into other forms of energy through physical or chemical means, and is released by converting it back into the electric energy when needed. In short, energy storage is similar to a large "power bank", which stores the electric energy when photovoltaics and wind energy are sufficient and releases stored electric power when needed.

Taking electrochemical energy storage as an example. An energy-storage apparatus is provided in the present solution. The energy-storage apparatus is equipped with a chemical battery cell, which mainly uses chemical elements in a battery cell as an energy-storage media. A charging and discharging process is accompanied by a chemical reaction or change of the energy-storage media. In short, electric energy generated from the wind energy and the solar energy is stored in the chemical battery cell, is released for use when an external electric energy consumption reaches a peak, or is transferred to a place experiencing power shortage for subsequent consumption.

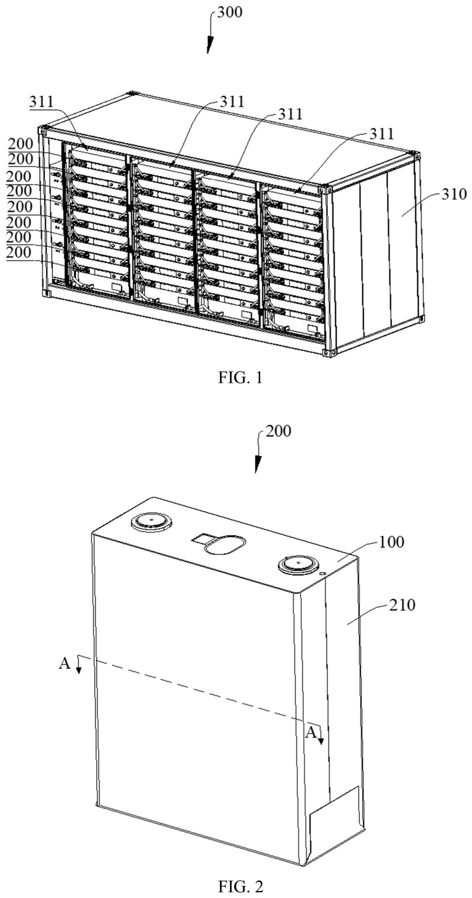

Referring to FIG. 1, an energy-storage apparatus 300 is provided in embodiments of the present disclosure. The energy-storage apparatus 300 includes a box 310 and multiple battery cells 200. The box 310 defines an accommodating cavity 311, and the multiple battery cells 200 are accommodated in the accommodating cavity 311.

The energy-storage apparatus 300 in the embodiments of the present disclosure may be, but is not limited to, at least one of an energy-storage module, an energy-storage cabinet, an energy-storage box, an energy-storage container, etc. The energy-storage apparatus 300 in the embodiments of the present disclosure may be applied to power grids, household use, industrial applications, vehicles, etc., to store the electric energy and to provide electric energy for electric load when needed.

Optionally, there may be multiple accommodating cavities 311, and each of the multiple accommodating cavities 311 is configured to accommodate one or more battery modules.

Optionally, a battery cell 200 may be, but is not limited to, a rechargeable battery, a primary battery, etc.

The rechargeable battery, also known as second battery or storage battery, refers to a battery which can continue to be used by recharging to activate active materials after discharging. A recyclable nature of the rechargeable battery has made them a main power source for electricity-consumption device gradually.

Optionally, the multiple battery cells 200 may be connected in series, in parallel, or in series-parallel.

Optionally, the multiple battery cells 200 may be disposed in an array or in a stacked way. In a specific embodiment, the multiple battery cells 200 are divided into multiple battery modules, with each battery module including multiple battery cells 200. The multiple battery cells 200 in each battery module are disposed in an array or in a stacked way, and the multiple battery modules are spaced apart from one another in an array or in a stacked way.

Referring to FIG. 2 to FIG. 4, a battery cell 200 is further provided in embodiments of the present disclosure. The battery cell 200 includes a housing 210, an end cover assembly 100, and an electrode assembly 240. The end cover assembly 100 and the housing 210 cooperatively define a containing cavity 230. The electrode assembly 240 is disposed in the containing cavity 230, and the electrode assembly 240 is electrically connected to a terminal post 30 of the end cover assembly 100.

It may be understood that, an upper cover 10 of the end cover assembly 100 may be connected to the housing 210. Optionally, the upper cover 10 is connected to the housing 210 by welding.

Optionally, the housing 210 may be, but is not limited to, an aluminum housing.

Optionally, the battery cell 200 may be, but is not limited to, at least one of a blade battery, a cylindrical battery, a prismatic battery, etc.

Optionally, the battery cell 200 may be, but is not limited to, a lithium-ion rechargeable battery, a lithium-ion primary battery, a lithium-sulfur battery, a sodium-lithium ion battery, a sodium-ion battery, a magnesium-ion battery, etc. In the following embodiments of the present disclosure, a lithium-ion battery is taken as an example for illustration, which should not be construed as a limitation on the battery cell 200 of the embodiments of the present disclosure, nor as a limitation on the end cover assembly 100 of the embodiments of the present disclosure.

Optionally, the electrode assembly 240 includes a positive electrode 241, a separator 242, and a negative electrode 243. The separator 242 is located between the positive electrode 241 and the negative electrode 243, and is used to insulate the positive electrode 241 from the negative electrode 243. The electrode assembly 240 may be, but is not limited to, a spiral wound structure, a laminated structure, etc.

Optionally, the terminal post 30 may be a positive terminal post 30a or a negative terminal post 30b. When the terminal post 30 is the positive terminal post 30a, the positive terminal post 30a is electrically connected to the positive electrode 241. When the terminal post 30 is the negative terminal post 30b, the negative terminal post 30b is electrically connected to the negative electrode 243.

Optionally, the end cover assembly 100 includes the positive terminal post 30a and the negative terminal post 30b, and the positive terminal post 30a and the negative terminal post 30b are insulated from each other.

Optionally, the battery cell 200 further includes an electrolyte, and the electrolyte is disposed in the containing cavity 230.

Optionally, the electrolyte includes electrolyte salt and organic solvent. The electrolyte salt may be, but is not limited to, at least one of lithium hexafluorophosphate ($LiPF_6$), lithium tetrafluoroborate ($LiBF_4$), lithium bis(fluorosulfonyl)imide (LiFSI), lithium bis(trifluoromethanesulfonyl)imide (LiTFSI), lithium bis(oxalato)borate (LiBOB), lithium difluorobis(oxaolato)phosphate (LiODFP), lithium difluoro(oxalato)borate (LiODFB), lithium difluorophosphate ($LiPO_2F_2$), lithium trifluoromethanesulfonate ($CF_3SO_3Li$), etc.

In the related art, an end cover assembly of a battery cell requires an upper plastic member to insulate each of a terminal post and a pressure ring from an upper cover. In addition, a sealing ring is required to be disposed between the upper cover and the terminal post, and the sealing ring is compressed through a cooperation of the upper plastic member, the terminal post, the pressure ring, and the upper cover, to avoid a liquid leakage (i.e., electrolyte leakage) of the battery cell. However, a material of the upper plastic member is resin. When the battery cell undergoes a thermal runaway, a temperature of the battery cell rises, which may easily cause the upper plastic member to melt. The terminal post is prone to sink and retract into the upper plastic member, thereby reducing a compressed extent of the sealing ring, making the battery cell prone to electrolyte leakage, and degrading a safety performance of the battery cell.

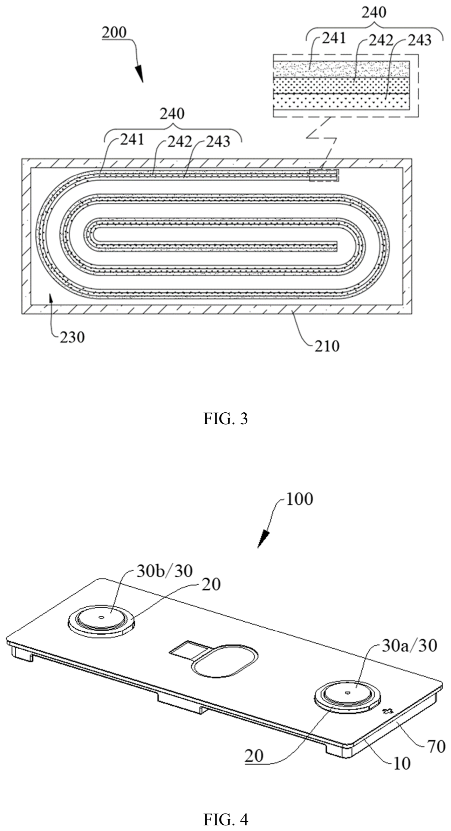

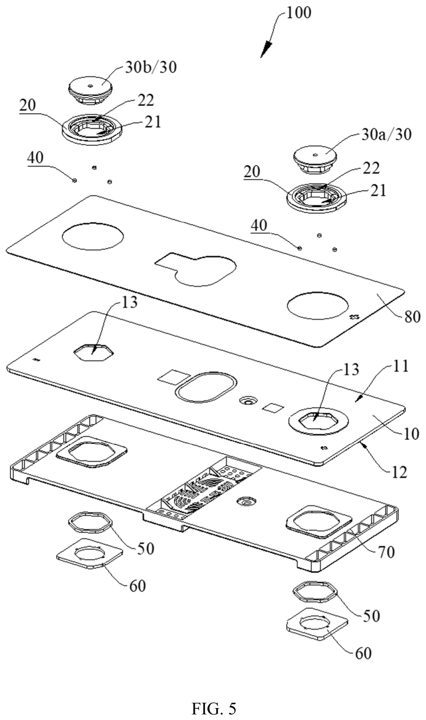

Referring to FIG. 4 to FIG. 7, an end cover assembly 100 is provided in embodiments of the present disclosure. The end cover assembly includes an upper cover 10, an upper plastic member 20, a terminal post 30, and a supporting member 40. The upper cover 10 has a first surface 11 and a second surface 12 opposite to each other in a thickness direction of the upper cover 10. The upper cover 10 also defines a throug hole 13, and the through hole 13 extends through the first surface 11 and the second surface 12. The upper plastic member 20 is disposed on a side of the first surface 11 of the upper cover 10, and the upper plastic member 20 partially passes through the through hole 13. The upper plastic member 20 defines a penetrating hole 21 and a mounting hole 22 spaced apart from each other, and the upper plastic member 20 has a first orthographic projection on the first surface 11. The terminal post 30 includes a flange portion 31 and a penetrating portion 32 connected to each other. The flange portion 31 is located on one side of the upper plastic member 20 away from the upper cover 10 and abuts against the upper plastic member 20. The penetrating portion 32 protrudes from one side of the flange portion 31 facing towards the first surface 11, and the penetrating portion 32 passes through the penetrating hole 21. The flange portion 31 has a second orthographic projection on the first surface 11. The supporting member 40 passes through the mounting hole 22. In an arrangement direction of the first surface 11 and the second surface 12, the supporting member 40 is disposed between the flange portion 31 and the upper cover 10. The supporting member 40 has a third orthographic projection on the first surface 11, and the third orthographic projection partially overlaps with the first orthographic projection and partially overlaps with the second orthographic projection.

It may be noted that, when the end cover assembly 100 is assembled to the battery cell, the first surface 11 is farther from an interior of the battery cell than the second surface 12. In other words, the second surface 12 is farther from an outer surface of the battery cell than the first surface 11. In other words, the first surface 11 is closer to the outer surface of the battery cell than the second surface 12.

Optionally, a material of the upper cover 10 may be, but is not limited to, aluminum, such as a smooth aluminum sheet.

It may be understood that, the upper plastic member 20 is configured to insulate the upper cover 10 from the terminal post 30, so as to avoid a short circuit between the positive terminal post 30a and the negative terminal post 30b.

It may be understood that, the upper plastic member 20 is partially disposed in the through hole 13, and the upper plastic member 20 is partially disposed on one side of the upper cover 10 facing away from the second surface 12.

Optionally, the number of mounting holes 22 may be one or more. When there are multiple mounting holes 22, multiple mounting holes 22 are spaced apart from one another around a periphery of the penetrating hole 21. In a specific embodiment, the multiple mounting holes 22 are evenly distributed around the periphery of the penetrating hole 21.

Optionally, the number of supporting members 40 may be one or one. When there are multiple supporting members 40, multiple supporting members 40 are spaced apart from one another around the periphery of the penetrating hole 21. Optionally, the number of the supporting members 40 corresponds with the number of the mounting holes 22 in a one-to-one correspondence, that is, each of the supporting members 40 passes through one mounting hole 22, and different supporting members 40 pass through different mounting holes 22.

Optionally, the number of the supporting members 40 may be ranged from 1 to 8. Specifically, the number of the supporting members 40 may be, but is not limited to, 1, 2, 3, 4, 5, 6, 7, 8, etc.

Optionally, the supporting member 40 is in an interference fit with the upper plastic member 20.

It may be understood that, the flange portion 31 and the penetrating portion 32 are arranged in the thickness direction of the upper cover 10. In a direction perpendicular to a thickness of the upper cover 10, a radial dimension of the flange portion 31 is greater than that of the penetrating portion 32.

It may be understood that, the flange portion 31 is located on the side of the first surface 11 of the upper plastic member 10, that is, the flange portion 31 is disposed facing away from the second surface 12. It may also be understood that, during an assembly of the terminal post 30, the penetrating portion 32 passes through the penetrating hole 21 in a direction from the first surface 11 towards the second surface 12.

It may be noted that, the third orthographic projection partially overlaps with the first orthographic projection and partially overlaps with the second orthographic projection. It may be understood that, in the thickness direction of the upper cover 10, the supporting member 40 partially overlaps with the flange portion 31 and partially overlaps with the upper plastic member 20.

Optionally, the end cover assembly 100 further includes a sealing ring 50 and a pressure ring 60. The sealing ring 50 is disposed on one side of the upper cover 10 facing away from the upper plastic member 20, and the sealing ring 50 is sleeved on a periphery of the penetrating portion 32. The pressure ring 60 is disposed on one side of the sealing ring 50 facing away from the upper cover 10. The pressure ring 60 is sleeved on the penetrating portion 32, and the pressure ring 60 is electrically connected to the penetrating portion 32. The flange portion 31, the upper plastic member 20, the upper cover 10 and the pressure ring 60 cooperate to compress the sealing ring 50.

It may be noted that, during an assembly of the end cover assembly 100, the penetrating portion 32 of the terminal post 30 passes through the upper plastic member 20, the upper cover 10, the sealing ring 50 and the pressure ring 60 in sequence.

After the end cover assembly 100 is assembled, the sealing ring 50 of the end cover assembly 100 is compressed to a certain extent (i.e., the sealing ring 50 has an elasticity). That is, when the sealing ring 50 is assembled to the end cover assembly 100, the sealing ring 50 is in a state of being compressed, which may better narrow a gap between the upper cover 10 and the terminal post 30, thereby better avoiding a phenomenon of liquid leakage inside the battery cell.

The end cover assembly in the embodiments of the present disclosure includes the upper cover 10, the upper plastic member 20, the terminal post 30, and the supporting member 40. The upper cover 10 defines the through hole 13. The upper plastic member 20 is disposed on the side of the first surface 11 of the upper cover 10 and partially passes through the through hole 13, and the upper plastic member 20 defines the penetrating hole 21 and the mounting hole 22 spaced apart from each other. The terminal post 30 includes the flange portion 31 and the penetrating portion 32 connected to each other. The flange portion 31 is located on one side of the upper plastic member 20 facing away from the upper cover 10 and abuts against the upper plastic member 20. The penetrating portion 32 protrudes from one side of the flange portion 31 facing towards the first surface 11, and the penetrating portion 32 passes through the penetrating hole 21. The supporting member 40 passes through the mounting hole 22. In this embodiment, the supporting member 40 is disposed in the upper plastic member 20. When the battery cell undergoes the thermal runaway or during the assembly of the end cover assembly 100, a temperature of the terminal post 30 rises, which may cause the upper plastic member 20 to melt. A rebound force generated by the sealing ring 50 will be released, and the terminal post 30 will sink (i.e., the flange portion 31 moves towards the upper cover 10). By providing the supporting member 40 in the upper plastic member 20, when the terminal post 30 sinks for a certain distance, the supporting member 40 will abut against and support the flange portion 31, so as to prevent the terminal post 30 from further sinking and to restrain the rebound force generated by the sealing ring 50 from a full release, therefore a liquid leakage of the battery cell is better avoided, and a safety of using the battery cell is improved.

In the related art, in order to provide the supporting member 40 with a more appropriate height, which can better restrain a release of the rebound force generated by the sealing ring 50 when the temperature of the terminal post 30 rises, the mounting hole 22 extends through the entire upper plastic member 20. Although the supporting member 40 is in an interference fit with the upper plastic member 20, during the assembly of the end cover assembly 100, the upper plastic member 20 and the supporting member 40 are usually assembled first, and then being transferred to a next station for an assembly of other components. During a transfer process, the supporting member 40 is prone to detach from the upper plastic member 20, which lowers an assembly yield of the supporting member 40. When the supporting member 40 is missing in the end cover assembly 100, the safety performance of the battery cell will be degraded.

The upper plastic member 20 in the embodiments of the present disclosure has the first orthographic projection on the first surface 11, the flange portion 31 has the second orthographic projection on the first surface 11, the supporting member 40 has the third orthographic projection on the first surface 11. The third orthographic projection partially falls into the first orthographic projection and partially overlaps with the second orthographic projection. The third orthographic projection partially falls into the second orthographic projection, enabling the supporting member 40 to well support the flange portion 31 when a temperature inside the battery cell rises. At the same time, the third orthographic projection partially overlaps with the first orthographic projection, which means that the supporting member 40 is assembled to the upper plastic member 20, creating an overlapping part of the upper plastic member 20 and the supporting member 40 to support the supporting member 40. When an assembly of the supporting member 40 and the upper plastic member 20 is transferred to the next station, the supporting member 40 is better prevented from detaching from the upper plastic member 20, and the assembly yields of the upper plastic member 20 and the supporting member 40 are increased, therefore a safety performance of the battery cell is improved.

In some embodiments, a melting point of the supporting member 40 is higher than that of the upper plastic member 20. A melting point of the upper plastic member 20 in the end cover assembly 100 is lower than that of the sealing ring 50. When the battery cell undergoes the thermal runaway, the upper plastic member 20 melts, while the supporting member 40 and the sealing ring 50 do not melt, enabling the supporting member 40 to well support the flange portion 31 of the terminal post 30 when the terminal post 30 sinks. As a result, the terminal post 30 is prevented from further sinking, the rebound force generated by the sealing ring 50 is restrained from full release, therefore the liquid leakage of the battery cell is better avoided, and the safety of using the battery cell is improved.

Optionally, a material of the upper plastic member 20 and a material of the sealing ring 50 are both resin.

Optionally, a melting point of the sealing ring 50 is higher than that of the upper plastic member 20. In some embodiments, the melting point of the upper plastic member 20 ranges from 280°C to 300°C, and the melting point of the sealing ring 50 is higher than or equal to 500°C.

In the embodiments of the present disclosure, when a numerical range from *a* to *b* is involved, unless otherwise specified, it means that the numerical value may be any value between *a* and *b,* including an endpoint numerical value *a* and an endpoint numerical value *b.*

Optionally, the melting point of the supporting member 40 is higher than or equal to 500°C. Specifically, the melting point of the supporting member 40 may be, but is not limited to, 500°C, 550°C, 600°C, 650°C, 700°C, 800°C, 900°C, 1000°C, 1100°C, 1200°C, 1300°C, etc. If the melting point of the supporting member 40 is too low, the supporting member 40 will soften or even melt when the battery cell undergoes the thermal runaway, reducing a support to the pressure ring 60 provided by the supporting member 40. A supporting member 40 with high melting point is preferred, but it may be difficult to acquire in terms of materials.

Optionally, the supporting member 40 is insulating. Optionally, a material of the supporting member 40 may be, but is not limited to, ceramic.

In some embodiments, an area of an overlapping part of the third orthographic projection and the first orthographic projection is smaller than an area of an overlapping part of the third orthographic projection and the second orthographic projection.

It may be understood that, an area of an overlapping part of the supporting member 40 and the flange portion 31 is greater than an area of a laminated part of the supporting member 40 and the upper plastic member 20.

After the battery cell undergoes the thermal runaway and the upper plastic member 20 melts, a support provided by the supporting member 40 ensures that a certain distance is maintained between the flange portion 31 of the terminal post 30 and the upper cover 10, thus the terminal post 30 will not sink. If the area of the overlapping part of the supporting member 40 and the flange portion 31 is too small, due to the rebound force generated by the sealing ring 50, the supporting member 40 will lose balance, tilt, or rotate, thereby being jacked out of the flange portion 31 and the upper cover 10. Furthermore, without the support provided by the supporting member 40, the sealing ring 50 will fail in sealing, the liquid leakage of the battery cell will occur, and the safety of the battery cell will be degraded. In this embodiment, the area of the overlapping part of the third orthographic projection and the first orthographic projection is smaller than the area of the overlapping part of the third orthographic projection and the second orthographic projection, which ensures that the area of the overlapping part of the supporting member 40 and the flange portion 31 is relatively large. After the battery cell undergoes the thermal runaway and the upper plastic member 20 melts, the rebound force generated by the sealing ring 50 will not jack the supporting member 40 out of a gap between the flange portion 31 and the upper cover 10, enabling the supporting member 40 to stably support the flange portion 31. As a result, the release of the rebound force generated by the sealing ring 50 is better restrained, providing the battery cell with a good sealing performance, therefore the liquid leakage of the battery cell is better avoided, and the safety of using the battery cell is improved.

Optionally, the area of the overlapping part of the third orthographic projection and the second orthographic projection is larger than or equal to half of an area of the third orthographic projection.

In other words, the area of the overlapping part of the supporting member 40 and the flange portion 31 is larger than or equal to half of an area of an orthographic projection of the supporting member 40 on the first surface 11.

After the battery cell undergoes the thermal runaway and the upper plastic member 20 melts, the support provide by the supporting member 40 ensures that a certain distance is maintained between the flange portion 31 of the terminal post 30 and the upper cover 10, thus the terminal post 30 will not sink. If the area of the overlapping part of the supporting member 40 and the flange portion 31 is too small, due to the rebound force generated by the sealing ring 50, the supporting member 40 will lose balance, tilt, or rotate, thereby being pushed out of the flange portion 31 and the upper cover 10. Furthermore, without the support provided by the supporting member 40, the sealing ring 50 will fail in sealing, the liquid leakage of the battery cell will occur, and the safety of the battery cell will be degraded. In this embodiment, the area of the overlapping part of the third orthographic projection and the second orthographic projection is larger than or equal to half of an area of the third orthographic projection, which ensures that the area of the overlapping part of the supporting member 40 and the flange portion 31 is relatively large. After the battery cell undergoes the thermal runaway and the upper plastic member 20 melts, the rebound force generated by the sealing ring 50 will not jack the supporting member 40 out of the gap between the flange portion 31 and the upper cover 10, enabling the supporting member 40 to stably support the flange portion 31. As a result, the release of the rebound force generated by the sealing ring is better restrained, providing the battery cell with good sealing performance, therefore the liquid leakage of the battery cell is better avoided, and the safety of using the battery cell is improved.

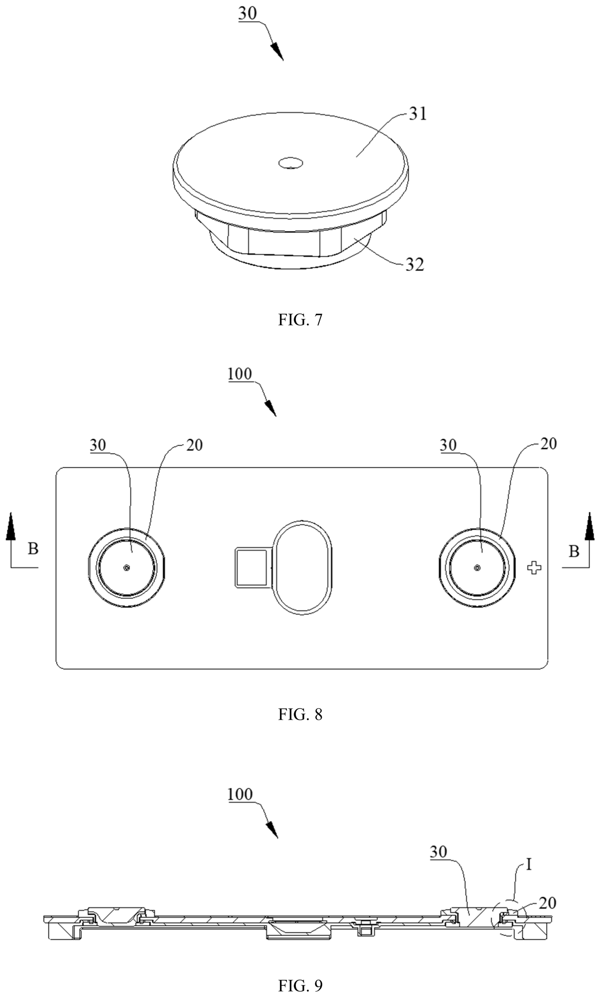

Referring to FIG. 8 to FIG. 10, in some embodiments, a distance between a surface of the flange portion 31 facing towards the upper cover 10 and the first surface 11 is referred to as *d1,* a height of the supporting member 40 in the thickness direction of the upper cover 10 is referred to as *h1,* and *d1 > h1.*

It may be understood that, a height of a gap between the flange portion 31 and the first surface 11 is higher than the height of the supporting member 40.

In this embodiment, by allowing a distance *d1* between the surface of the flange portion 31 facing towards the upper cover 10 and the first surface 11 greater than a height *h1* of the supporting member 40 in the thickness direction of the upper cover 10, it is possible to better prevent the supporting member 40 from jacking up the flange portion 31 during the assembly of the end cover assembly 100. If the flange portion 31 is jacked up by the supporting member 40, a gap between the flange portion 31 and the upper plastic member 20 is defined, and a stability of the compressed extent of the sealing ring 50 is decreased, creating a difference between compressed extents of the sealing rings 50 for upper plastic members 20 in different end cover assemblies 100, therefore a dimension stability of the end cover assembly 100 is decreased.

In some embodiments, the end cover assembly 100 satisfies a relationship of $0 < d1 - h1 \leq 0.1$ mm.

It may be understood that, a difference between the distance *d1* between the surface of the flange portion 31 facing towards the upper cover 10 and the first surface 11, and the height *h1* of the supporting member 40 in the thickness direction of the upper cover 10, ranges from 0 to 0.1 mm.

Specifically, the difference between the distance *d1* between the surface of the flange portion 31 facing towards the upper cover 10 and the first surface 11, and the height *h1* of the supporting member 40 in the thickness direction of the upper cover 10 may be, but is not limited to, 0.01 mm, 0.02 mm, 0.03 mm, 0.04 mm, 0.05 mm, 0.06 mm, 0.07 mm, 0.08 mm, 0.09 mm, 0.1 mm, etc.

In this embodiment, if the difference *d1 - h1* between the distance *d1* between the surface of the flange portion 31 facing towards the upper cover 10 and the first surface 11, and the height *h1* of the supporting member 40 in the thickness direction of the upper cover 10 is too large, when the battery cell undergoes the thermal runaway, a distance between the supporting member 40 and the flange portion 31 is too large, reducing a support to the flange portion 31 provided by the supporting member 40. As a result, it is difficult to prevent the terminal post 30 from excessive sinking, which reduces a compressed extent of the sealing ring 50 and degrades a sealing performance of the sealing ring 50, thereby increasing a risk for the liquid leakage of the battery cell. When the difference between the distance *d1* between the surface of the flange portion 31 facing towards the upper cover 10 and the first surface 11, and the height *h1* of the supporting member 40 in the thickness direction of the upper cover 10, ranges from 0 to 0.1 mm, in this way, after the end cover assembly 100 is assembled, the flange portion 31 will not be easily jacked up by the supporting member 40, which can better ensure the stability of the compressed extent of the sealing ring 50. At the same time, when the battery cell undergoes the thermal runaway, the supporting member 40 will support the flange portion 31 to prevent the terminal post 30 from excessive sinking, therefore the liquid leakage of the battery cell is better avoided.

Furthermore, the difference between the distance *d1* between the surface of the flange portion 31 facing towards the upper cover 10 and the first surface 11, and the height *h1* of the supporting member 40 in the thickness direction of the upper cover 10, ranges from 0.03 mm to 0.1 mm. In this way, after the end cover assembly 100 is assembled, the supporting member 40 is less likely to jack up the flange portion 31, which can better ensure the stability of the compressed extent of the sealing ring 50. At the same time, when the battery cell undergoes the thermal runaway, the supporting member 40 will better support the flange portion 31 to better prevent the terminal post 30 from excessive sinking, therefore the liquid leakage of the battery cell is better avoided.

In some embodiments, the distance *d1* between the surface of the flange portion 31 facing towards the upper cover 10 and the first surface 11 ranges from 0.9 mm to 1.2 mm. Specifically, the distance *d1* between the surface of the flange portion 31 facing towards the upper cover 10 and the first surface 11 may be, but is not limited to, 0.9 mm, 0.95 mm, 1.0 mm, 1.05 mm, 1.1 mm, 1.15 mm, 1.2 mm, etc. If the distance *d1* between the surface of the flange portion 31 facing towards the upper cover 10 and the first surface 11 is too small, a space left for the upper plastic member 20 will be too small, and the upper plastic member 20 may only be manufactured in a thin shape, reducing a mechanical strength of the upper plastic member 20. If the distance *d1* between the surface of the flange portion 31 facing towards the upper cover 10 and the first surface 11 is too large, a thickness of the upper plastic member 20 will be too thick, increasing a cost of manufacturing the upper plastic member 20.

In some embodiments, the height *h1* of the supporting member 40 in the thickness direction of the upper cover 10 ranges from 0.85 mm to 1.15 mm. Specifically, the height *h1* of the supporting member 40 in the thickness direction of the upper cover 10 may be, but is not limited to, 0.85 mm, 0.9 mm, 0.95 mm, 1.0 mm, 1.05 mm, 1.1 mm, 1.15 mm, etc. If the height *h1* of the supporting member 40 is too small, when the battery cell undergoes the thermal runaway, the distance between the supporting member 40 and the flange portion 31 is too large, reducing the support to the flange portion 31 provided by the supporting member 40. As a result, it is difficult to prevent the terminal post 30 from excessive sinking, which reduces the compressed extent of the sealing ring 50 and degrades the sealing performance of the sealing ring 50, thereby increasing the risk for liquid leakage of the battery cell. If the height *h1* of the supporting member 40 is too large, after the end cover assembly 100 is assembled, the flange portion 31 will be easily jacked up by the supporting member 40, and the gap between the flange portion 31 and the upper plastic member 20 is defined. The stability of the compressed extent of the sealing ring 50 is decreased, creating difference between compressed extents of the sealing rings 50 for upper plastic members 20 in different end cover assemblies 100, therefore the dimension stability of the end cover assembly 100 is decreased.

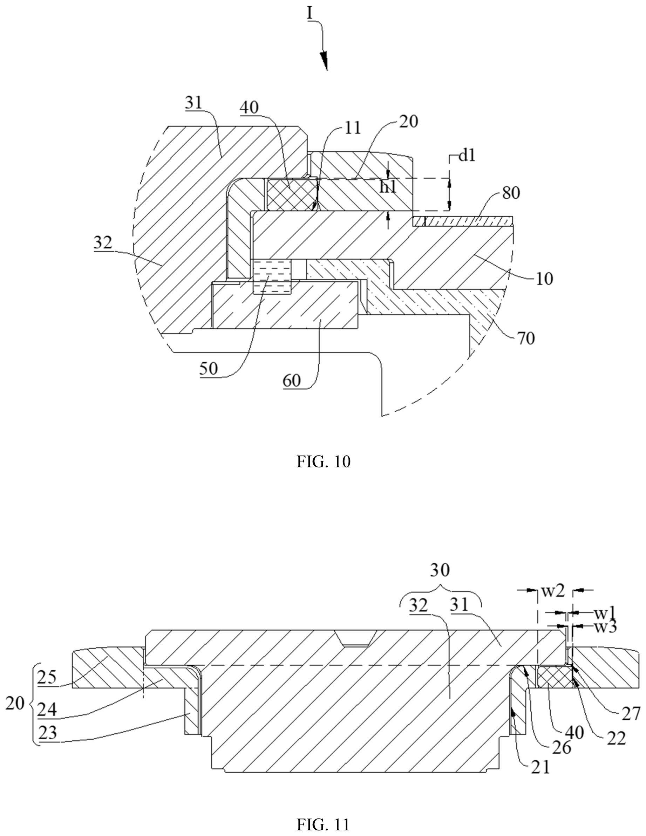

Referring to FIG. 11, in some embodiments, the upper plastic member 20 includes a first plastic portion 23, a second plastic portion 24, and a third plastic portion 25 that are bent and connected in sequence. The first plastic portion 23 and the third plastic portion 25 respectively bend towards opposite directions relative to the second plastic portion 24. The first plastic portion 23 passes through the through hole 13, and the first plastic portion 23 defines the penetrating hole 21. The second plastic portion 24 and the third plastic portion 25 define a recessed groove 26, and the recessed groove 26 is configured to support the flange portion 31. Two surfaces of the second plastic portion 24 opposite to each other in a thickness direction of the upper cover 10 respectively abut against the first surface 11 and the flange portion 31. The mounting hole 22 is defined between the second plastic portion 24 and the third plastic portion 25. The mounting hole 22 extends through a surface of the second plastic portion 24 facing towards the first surface 11 and a surface of the third plastic portion 25 facing towards the first surface 11. The mounting hole 22 further extends through a surface of the second plastic portion 24 facing away from the first surface 11. The third plastic portion 25 has a stepped surface 27, the stepped surface 27 is located on one side of the supporting member 40 facing away from the first surface 11, and the stepped surface 27 faces towards the supporting member 40. An orthographic projection of the stepped surface 27 on the first surface 11 partially overlaps with the third orthographic projection.

It may be understood that, the second plastic portion 24 is disposed around a periphery of the first plastic portion 23, and the third plastic portion 25 is disposed around a periphery of the second plastic portion 24.

It may be understood that, the first plastic portion 23, the second plastic portion 24, and the third plastic portion 25 are all of annular structures.

It may be understood that, the first plastic portion 23 is located between the penetrating portion 32 and the upper cover 10; the second plastic portion 24 is located between the flange portion 31 and the upper cover 10; and the third plastic portion 25 is disposed around a periphery the flange portion 31.

It may be understood that, the flange portion 31 abuts against a bottom wall of the recessed groove 26. In other words, the flange portion 31 abuts against the second plastic portion 24.

It may be understood that, the mounting hole 22 is partially defined in the second plastic portion 24 and is partially defined in the first plastic portion 23.

It may be understood that, the mounting hole 22 does not extend through a surface of the third plastic portion 25 facing away from the first surface 11.

It may be noted that, an overlapping part of the orthographic projection of the stepped surface 27 on the first surface 11 and the third orthographic projection, is the same as an overlapping part of the first orthographic projection and the third orthographic projection.

It may be understood that, an orthographic projection of the upper plastic member 20 on the first surface 11 only overlaps with the orthographic projection of the supporting member 40 on the first surface 11 on the stepped surface 27.

In this embodiment, the stepped surface 27 is formed on the third plastic portion 25. In this way, after the supporting member 40 is assembled to the upper plastic member 20, the assembly of the supporting member 40 and the upper plastic member 20 is required to be transferred to the next station, the first plastic portion 23 is facing upward relative to the third plastic portion 25, and the supporting member 40 is supported by the stepped surface 27 of the third plastic portion 25. As a result, the supporting member 40 is prevented from detaching from the upper plastic member 20, and the assembly yields of the upper plastic member 20 and the supporting member 40 are increased, therefore the safety performance of the battery cell is improved. In addition, the mounting hole 22 extends through the surface of the second plastic portion 24 facing towards the first surface 11 and the surface of the third plastic portion 25 facing towards the first surface 11. During the assembly of the supporting member 40, the supporting member 40 may be assembled from one side of the second plastic portion 24 facing towards the first surface 11, which will not affect the assembly of the supporting member 40. Furthermore, by forming the stepped surface 27 on the third plastic portion 25, a dimension of each portion of the upper plastic member 20 is unnecessary to change, that is, the dimension such as a thickness of the first plastic portion 23, a thickness of the second plastic portion 24, and a thickness of the third plastic portion 25, etc., does not need to be redesigned, which will not excessively affect a cost of manufacturing the end cover assembly 100.

In some embodiments, in a radial direction of the recessed groove 26, a gap $w1$ is defined between the flange portion 31 and the third plastic portion 25, a width of the supporting member 40 is referred to as $w2$, a width of the stepped surface 27 is referred to as $w3$, and

$$0.1 \text{ mm} \leqslant w3 \leqslant \frac{1}{2} w2 - w1.$$

It may be understood that, in the radial direction of the recessed groove 26, a gap $w1$ is defined between the flange portion 31 and the third plastic portion 25; in the redial direction of the recessed groove 26, a width of the supporting member 40 is referred to as $w2$; in the radial direction of the recessed groove 26, a width of the stepped surface 27 is referred to as $w3$.

Specifically, the width of the stepped surface 27 may be, but is not limited to, 0.1 mm, 0.13 mm, 0.15 mm, 0.18 mm, 0.2 mm, 0.23 mm, 0.25 mm, 0.28 mm, 0.3 mm, etc.

In this embodiment, if the width $w3$ of the stepped surface 27 is too small, after the supporting member 40 is assembled to the upper plastic member 20, when the assembly of the supporting member 40 and the upper plastic member 20 is required to be transferred to the next station, the support provided by the stepped surface 27 to the supporting member 40 will be insufficient, making the supporting member 40 still being possible to detach from the upper plastic member 20. As a result, the assembly yields of the of the upper plastic member 20 and the supporting member 40 are decreased, and the safety performance of the battery cell is degraded. If the width $w3$ of the stepped surface 27 is too large, the overlapping part of the supporting member 40 and the flange portion 31 will be reduced. After the battery cell undergoes the thermal runaway and the upper plastic member 20 melts, and the supporting member 40 abuts against the flange portion 31, due to the rebound force generated by the sealing ring 50, the supporting member 40 will lose balance, tilt, or rotate, thereby being jacked out of the flange portion 31 and the upper cover 10. Furthermore, without the support provided by the supporting member 40, the sealing ring 50 will fail in sealing, the liquid leakage of the battery cell will occur, and the safety of the battery cell will be degraded. If the width $w3$ of the stepped surface 27 satisfies

$$0.1 \text{ mm} \leqslant w3 \leqslant \frac{1}{2} w2 - w1$$, when the assembly

of the supporting member 40 and the upper plastic member 20 is transferred to the next station, the supporting member 40 is better prevented from detaching from the upper plastic member 20, and the assembly yields of the upper plastic member 20 and the supporting member 40 are increased. Also, after the battery cell undergoes the thermal runaway and the upper plastic member 20 melts, and the supporting member 40 abuts against the flange portion 31, the supporting member 40 is better prevented from being jacked out from between the flange portion 31 and the upper cover 10, enabling the supporting member 40 to stably support the flange portion 31. As a result, the release of the rebound force generated by the sealing ring 50 can be better restrained, providing the battery cell with good sealing performance, therefore the liquid leakage of the battery cell is better avoided, and improving the safety of the battery cell in use.

Optionally, in the radial direction of the recessed groove 26, the gap $w1$ between the flange portion 31 and the third plastic portion 25 satisfies $0 < w1 \leqslant 0.1$ mm. Specifically, in the radial direction of the recessed groove 26, the gap $w1$ between the flange portion 31 and the third plastic portion 25 may be, but is not limited to, 0.01 mm, 0.02 mm, 0.04 mm, 0.06 mm, 0.08 mm, 0.1 mm, etc. If the gap $w1$ between the flange portion 31 and the third plastic portion 25 is too narrow, the assembly of the terminal post 30 will be affected. If the gap $w1$ between the flange portion 31 and the third plastic portion 25 is too wide, the terminal post 30 will prone to sink.

In some embodiments, in the radial direction of the recessed groove 26, a width of an overlapping part of the third orthographic projection and the second orthographic projection is referred to as $b1$, a gap $w1$ is defined between the flange portion 31 and the third plastic portion 25, a width of the supporting member 40 is referred to as $w2$, a width of the stepped surface 27 is referred to as $w3$,

and $\frac{1}{2} w2 \leqslant b1 \leqslant w2 - w1 - w3$.

After the battery cell undergoes the thermal runaway and the upper plastic member 20 melts, the support provided by the supporting member 40 ensures that a certain distance is maintained between the flange portion 31 of the terminal post 30 and the upper cover 10, thus the terminal post 30 will not sink. If the area of the overlapping part of the supporting member 40 and the flange portion 31 is too small, due to the rebound force generated by the sealing ring 50, the supporting member 40 will lose balance, tilt, or rotate thereby being jacked out of the flange portion 31 and the upper cover 10. Furthermore, without the support provided by the supporting member 40, the sealing ring 50 will fail in sealing, the liquid leakage of the battery cell will occur, and the safety of the battery cell will be degraded. In this embodiment,

$\frac{1}{2} w2 \leqslant b1 \leqslant w2 - w1 - w3$, which ensures that

the area of the overlapping part of the supporting member 40 and the flange portion 31 is relatively large. After the battery cell undergoes the thermal runaway and the upper plastic member 20 melts, the rebound force generated by the sealing ring 50 will not jack the supporting member 40 out of the gap between the flange portion 31 and the upper cover 10, enabling the supporting member 40 to stably support the flange portion 31. As a result, the release of the rebound force generated by the sealing ring 50 can be better restrained, providing the battery cell with good sealing performance, therefore the liquid leakage of the battery cell is better avoided, and the safety of using the battery cell is improved.

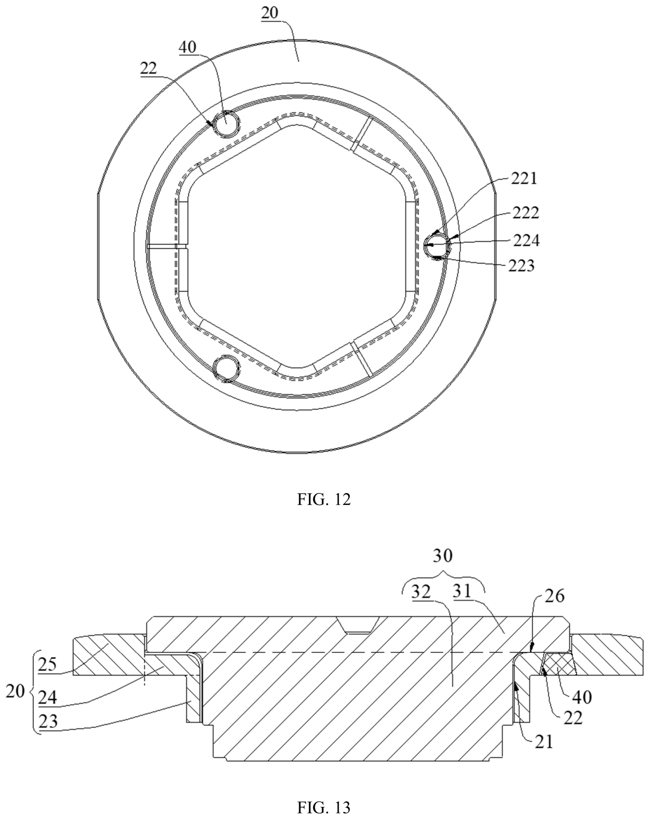

Referring to FIG. 12, in some embodiments, an inner wall of the mounting hole 22 includes a first wall surface 221, a first arc surface 222, a second wall surface 223, and a second arc surface 224 that are connected end-to-end in sequence. The first wall surface 221 and the second wall surface 223 are both located in the second plastic portion 24. The first wall surface 221, the second wall surface 223, and the stepped surface 27 are spaced apart from one another around a periphery of the mounting hole 22. The stepped surface 27 is connected to the first arc surface 222. The second arc surface 224, the first wall surface 221, and the second wall surface 223 are all located in the second plastic portion 24. The supporting member 40 abuts against the first wall surface 221, the second wall surface 223, and the first arc surface 222, and the supporting member 40 is spaced apart from the second arc surface 224.

Optionally, the first arc surface 222 may be, but is not limited to, at least one of an arc surface, an elliptical arc surface, an approximately arc surface, an approximately elliptical arc surface, etc.

Optionally, the second arc surface 224 may be, but is not limited to, at least one of an arc surface, an elliptical arc surface, an approximately arc surface, an approximately elliptical arc surface, etc.

Optionally, the first wall surface 221 may be, but is not limited to, a flat surface.

Optionally, the second wall surface 223 may be, but is not limited to, a flat surface.

In this embodiment, the supporting member 40 abuts against the first wall surface 221, the second wall surface 223, and the first arc surface 222, which creates an interference fit between the supporting member 40 and the upper plastic member 20. As a result, the supporting member 40 is prevented from detaching from the upper plastic member 20 during subsequent assembly processes, and an assembly yield of the end cover assembly 100 is increased. Meanwhile, the supporting member 40 is space apart from the second arc surface 224. In this way, when the supporting member 40 is assembled in the upper plastic member 20, a gap between the supporting member 40 and the second arc surface 224 provides a space for a plastic deformation to the upper plastic member 20, which can better avoid excessive extrusion force on the upper plastic member 20 during the assembly of the supporting member 40, thereby preventing the upper plastic member 20 from an easy cracking and increasing the assembly yields of the supporting member 40 and the upper plastic member 20.

Referring to FIG. 13, in other embodiments, the upper plastic member 20 includes a first plastic portion 23, a second plastic portion 24, and a third plastic portion 25 that are bent and connected in sequence. The first plastic portion 23 and the third plastic portion 25 respectively bend towards opposite directions relative to the second plastic portion 24. The first plastic portion 23 passes through the through hole 13, and the first plastic portion 23 defines the penetrating hole 21. The second plastic portion 24 and the third plastic portion 25 cooperatively define a recessed groove 26, which is configured to support the flange portion 31. The two surfaces of the second plastic portion 24 opposite to each other in the thickness direction of the upper cover 10 respectively abut against the first surface 11 and the flange portion 31. The second plastic portion 24 defines the mounting hole 22. In a direction from the upper cover 10 to the supporting member 40, a radial dimension of the mounting hole 22 gradually reduces, and a radial dimension of the supporting member 40 also gradually reduces. A perimetrical sidewall of the supporting member 40 abuts against an inner wall of the mounting hole 22.

Optionally, a shape of the mounting hole 22 may be, but is not limited to, a frustum of a cone, and a shape of the supporting member 40 may be, but is not limited to, a frustum of a cone.

In this embodiment, in the direction from the upper cover 10 to the supporting member 40, the radial dimension of the mounting hole 22 gradually reduces, and the radial dimension of the supporting member 40 also gradually reduces. The perimetrical sidewall of the supporting member 40 abuts against the inner wall of the mounting hole 22, which causes the third orthographic projection to partially overlap with the first orthographic projection. Thus, after the supporting member 40 is assembled to the upper plastic member 20, when the assembly of the supporting member 40 and the upper plastic member 20 is required to be transferred to the next station, the first plastic portion 23 is facing upward relative to the third plastic portion 25, and the supporting member 40 is supported by the second plastic portion 24. As a result, the supporting member 40 is prevented from detaching from the upper plastic member 20, and the assembly yields of the of the upper plastic member 20 and the supporting member 40 are increased, therefore the safety performance of the battery cell is improved. In addition, the radial dimension of the mounting hole 22 gradually reduces, and the radial dimension of the supporting member 40 also gradually reduces. During the assembly of the supporting member 40, the supporting member 40 may be assembled from one side of the second plastic portion 24 facing towards the first surface 11, which facilitates a rapid assembly of the supporting member 40 and improves an efficiency of the assembly of the supporting member 40.

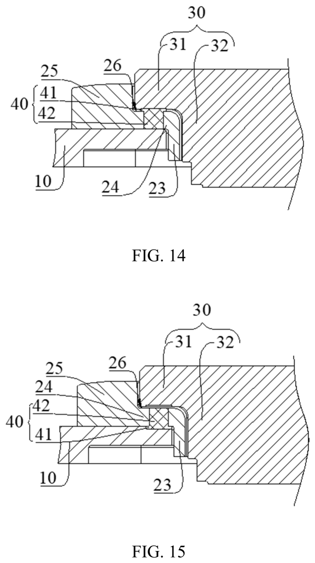

Referring to FIG. 14 and FIG. 15, in other embodiments, the upper plastic member 20 includes a first plastic portion 23, a second plastic portion 24, and a third plastic portion 25 that are bent and connected in sequence. The first plastic portion 23 and the third plastic portion 25 respectively bend towards opposite directions relative to the second plastic portion 24. The first plastic portion 23 passes through the through hole 13, and the first plastic portion 23 defines the penetrating hole 21. The second plastic portion 24 and the third plastic portion 25 cooperatively define the recessed groove 26, which is configured to support the flange portion 31, and two surfaces of the second plastic portion 24 opposite to each other in a thickness direction of the upper cover respectively abut against the first surface and the flange portion. The second plastic portion 24 defines the mounting hole 22, and the supporting member 40 includes a first supporting portion 41 and a second supporting portion 42 connected to each other. The first supporting portion 41 and the second supporting portion 42 are arranged in the thickness direction of the upper cover 10. A radial dimension of the first supporting portion 41 is greater than that of the second supporting portion 42. The first supporting portion 41 is located between the flange portion 31 and the second plastic portion 24 or between the second plastic portion 24 and the upper cover 10, and the second supporting portion 42 passes through the mounting hole 22.

It may be noted that, as illustrated in FIG. 14, when the first supporting portion 41 is located between the flange portion 31 and the second plastic portion 24, the first supporting portion 41 abuts against the flange portion 31 and the second plastic portion 24. As illustrated in FIG. 15, when the first supporting portion 41 is located between the second plastic portion 24 and the upper cover 10, the first supporting portion 41 abuts against the second plastic portion 24 and the upper cover 10.

It may be understood that, in this embodiment, the overlapping part of the third orthographic projection and the first orthographic projection falls into the orthographic projection of the first supporting portion 41 on the first surface 11. The overlapping part of the third orthographic projection and the second orthographic projection falls into the orthographic projection of the second supporting portion 42 on the first surface 11.

In this embodiment, the supporting member 40 includes the first supporting portion 41 and the second supporting portion 42 connected to each other. The first supporting portion 41 and the second supporting portion 42 are arranged in the thickness direction of the upper cover 10. The radial dimension of the first supporting portion 41 is greater than that of the second supporting portion 42. The first supporting portion 41 is located between the flange portion 31 and the second plastic portion 24 or between the second plastic portion 24 and the upper cover 10, and the second supporting portion 42 passes through the mounting hole 22. With the limit of the second supporting portion 42 and the second plastic portion 24, after the supporting member 40 is assembled to the upper plastic member 20, when the assembly of the supporting member 40 and the upper plastic member 20 is required to be transferred to the next station, the first supporting portion 41 is facing upward relative to the second plastic portion 24, and the supporting member 40 is supported by the second plastic portion 24. As a result, the supporting member 40 is prevented from detaching from the upper plastic member 20, and the assembly yields of the upper plastic member 20 and the supporting member 40 are increased, therefore the safety performance of the battery cell is improved. In addition, the radial dimension of the mounting hole 22 gradually reduces, and the radial dimension of the supporting member 40 also gradually reduces. During the assembly of the supporting member 40, the supporting member 40 may be assembled from one side of the second plastic portion 24 facing the first surface 11, which facilitates the rapid assembly of the supporting member 40 and improves an efficiency of the assembly of the supporting member 40.

Referring again to FIG. 4 to FIG. 6, in some embodiments, the end cover assembly 100 further includes a lower plastic member 70 and an upper patch 80. The lower plastic member 70 is disposed on one side of the upper cover 10 facing away from the upper plastic member 20, and the lower plastic member 70 is disposed around the pressure ring 60, the sealing ring 50, and a periphery of the penetrating portion 32. The lower plastic member 70 is configured to insulate the upper cover 10 from the electrode assembly 240. The upper patch 80 is disposed on the first surface 11 of the upper cover 10, and the upper patch 80 is disposed around a periphery of the upper plastic member 20. The upper patch is configured to insulate the upper cover 10 from an exterior and protect the upper cover 10.

It may be noted that, during the assembly of the end cover assembly 100, the penetrating portion 32 of the terminal post 30 passes through the upper plastic member 20, the upper patch 80, the upper cover 10, the lower plastic member 70, the sealing ring 50, and the pressure ring 60 in sequence.

Optionally, a material of the lower plastic member 70 may be, but is not limited to, resin.

Optionally, a material of the upper patch 80 may be, but is not limited to, resin.

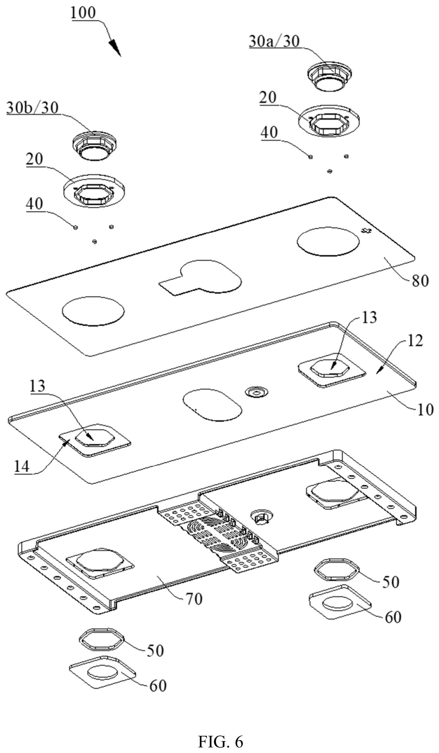

Referring again to FIG. 6, in some embodiments, the upper cover 10 defines a recess 14, the recess 14 is located on the second surface 12, and the recess 14 is recessed into the second surface 12. The recess 14 is disposed around a periphery of the through hole 13. The upper plastic member 20 is partially embedded into the groove 14, and the recess 14 is also configured to accommodate the sealing ring 50.

It may be understood that, the recess 14 is configured to accommodate the sealing ring 50 and part of the upper plastic member 20.

In this embodiment, by defining a recess 14 on the second surface 12 of the upper cover 10, the upper plastic member 20 is partially embedded into the groove 14, which facilitates assembly of the upper plastic member 20 and the upper cover 10. In addition, the upper plastic member 20 and the upper cover 10 is better positioned, improving an efficiency of the assembly of the end cover assembly 100.

In the present disclosure, reference to "embodiment" or "implementation" means that a particular feature, structure, or characteristic described in conjunction with the embodiment may be included in at least one embodiment of the present disclosure. The appearance of the aforementioned phrases at various positions in the description are not necessarily all referring to the same embodiment, nor are separate or alternative embodiments mutually exclusive with other embodiments. It will be apparent to those skilled in the art that the embodiments described herein can be combined with other embodiments. In addition, it should also be understood that, the features, structures, or characteristics described in the embodiments of the present disclosure may be combined arbitrarily without contradiction, so as to form another embodiment without departing from the spirit and scope of the technical solutions of the present disclosure.

Finally, it may be noted that the aforementioned implementations are merely intended to illustrate but not limit the technical solutions of the present disclosure. Although the present disclosure is described in detail with reference to the aforementioned preferred implementations, those of ordinary skill in the art should understand that modifications or equivalent replacements can be made to the technical solutions of the present disclosure without departing from the spirit and scope of the technical solutions of the present disclosure.

## Claims

1. An end cover assembly (100), comprising:

an upper cover (10) having a first surface (11) and a second surface (12) disposed opposite to each other in a thickness direction of the upper cover (10), wherein the upper cover (10) further defines a through hole (13), and the through hole (13) extends through the first surface (11) and the second surface (12);
an upper plastic member (20) disposed on a side of the first surface (11) of the upper cover (10) and partially passing through the through hole (13), wherein the upper plastic member (20) defines a penetrating hole (21) and a mounting hole (22) spaced apart from each other, and the upper plastic member (20) has a first orthographic projection on the first surface (11);
a terminal post (30) comprising a flange portion (31) and a penetrating portion (32) connected to each other, wherein the flange portion (31) is located on one side of the upper plastic member (20) facing away from the upper cover (10) and abuts against the upper plastic member (20), the penetrating portion (32) protrudes from one side of the flange portion (31) facing towards the first surface (11), and the penetrating portion (32) passes through the penetrating hole (21), and the flange portion (31) has a second orthographic projection on the first surface (11); and
a supporting member (40) passing through the mounting hole (22), wherein in an arrangement direction of the first surface (11) and the second surface (12), the supporting member (40) is disposed between the flange portion (31) and the upper cover (10), the supporting member (40) has a third orthographic projection on the first surface (11), and the third orthographic projection partially overlaps with the first orthographic projection and partially overlaps with the second orthographic projection.

2. The end cover assembly (100) of claim 1, wherein an area of an overlapping part of the third orthographic projection and the first orthographic projection is less than an area of an overlapping part of the third orthographic projection and the second orthographic projection.

3. The end cover assembly (100) of claim 1 or 2, wherein a distance between a surface of the flange portion (31) facing towards the upper cover (10) and the first surface (11) is referred to as $d1$, a height of the supporting member (40) in a thickness direction of the upper cover (10) is referred to as $h1$, and $d1 > h1$.

4. The end cover assembly (100) of claim 3, wherein the end cover assembly (100) satisfies a relationship of $0 < d1 - h1 \leq 0.1$ mm.

5. The end cover assembly (100) of any one of claims 1 to 4, wherein the upper plastic member (20) comprises a first plastic portion (23), a second plastic portion (24), and a third plastic portion (25) that are bent and connected in sequence, the first plastic portion (23) and the third plastic portion (25) respectively bend towards opposite directions relative to the second plastic portion (24), the first plastic portion (23) passes through the through hole (13) and the first plastic portion (23) defines the penetrating hole (21), the second plastic portion (24) and the third plastic portion (25) define a recessed groove (26), the recessed groove (26) is configured to support the flange portion (31), two surfaces of the second plastic portion (24) opposite to each other in a thickness direction of the upper cover (10) respectively abut against the first surface (11) and the flange portion (31); the mounting hole (22) is defined between the second plastic portion (24) and the third plastic portion (25), the mounting hole (22) extends through a surface of the second plastic portion (24) facing towards the first surface (11) and a surface of the third plastic portion (25) facing towards the first surface (11), and the mounting hole (22) further extends through a surface of the second plastic portion (24) facing away from the first surface (11); and the third plastic portion (25) has a stepped surface (27), the stepped surface (27) is located on one side of the supporting member (40) facing away from the first surface (11), the stepped surface (27) faces towards the supporting member (40), and an orthographic projection of the stepped surface (27) on the first surface (11) partially overlaps with the third orthographic projection.

6. The end cover assembly (100) of claim 5, wherein in a radial direction of the recessed groove (26), a gap $w1$ is defined between the flange portion (31) and the third plastic portion (25), a width of the supporting member (40) is referred to as $w2$, a width of the stepped surface (27) is referred to as $w3$, and

$$0.1 \text{ mm} \leqslant w3 \leqslant \frac{1}{2} w2 - w1.$$

7. The end cover assembly (100) of claim 5 or 6, wherein in a radial direction of the recessed groove (26), a width of an overlapping part of the third orthographic projection and the second orthographic projection is referred to as $b1$, a gap $w1$ is defined between the flange portion (31) and the third plastic portion (25), a width of the supporting member (40) is referred to as

$w2$, a width of the stepped surface (27) is referred to as $w3$, and $\frac{1}{2} w2 \leqslant b1 \leqslant w2 - w1 - w3$ .

8. The end cover assembly (100) of any one of claims 5 to 7, wherein an inner wall of the mounting hole (22) comprises a first wall surface (221), a first arc surface (222), a second wall surface (223), and a second arc surface (224) that are connected end-to-end in sequence, the first wall surface (221) and the second wall surface (223) are both located in the second plastic portion (24), the first wall surface (221), the second wall surface (223), and the stepped surface (27) are spaced apart from one another around a periphery of the mounting hole (22), the stepped surface (27) is connected to the first arc surface (222); the second arc surface (224), the first wall surface (221), and the second wall surface (223) are all located in the second plastic portion (24); and the supporting member (40) abuts against the first wall surface (221), the second wall surface (223), and the first arc surface (222), and the supporting member (40) is spaced apart from the second arc surface (224).

9. The end cover assembly (100) of any one of claims 1 to 4, wherein the upper plastic member (20) comprises a first plastic portion (23), a second plastic portion (24), and a third plastic portion (25) that are bent and connected in sequence, the first plastic portion (23) and the third plastic portion (25) respectively bend towards opposite directions relative to the second plastic portion (24), the first plastic portion (23) passes through the through hole (13), the first plastic portion (23) defines the penetrating hole (21), the second plastic portion (24) and the third plastic portion (25) cooperatively define a recessed groove (26), the recessed groove (26) is configured to support the flange portion (31), and two surfaces of the second plastic portion (24) opposite to each other in a thickness direction of the upper cover (10) respectively abut against the first surface (11) and the flange portion (31); the second plastic portion (24) defines the mounting hole (22); in a direction from the upper cover (10) to the supporting member (40), a radial dimension of the mounting hole (22) gradually reduces, and a radial dimension of the supporting member (40) gradually reduces; and a perimetrical sidewall of the supporting member (40) abuts against an inner wall of the mounting hole (22).

10. The end cover assembly (100) of any one of claims 1 to 4, wherein the upper plastic member (20) comprises a first plastic portion (23), a second plastic portion (24), and a third plastic portion (25) that are bent and connected in sequence, the first plastic portion (23) and the third plastic portion (25) respectively bend towards opposite directions relative to the second plastic portion (24), the first plastic portion (23) passes through the through hole (13), the first plastic portion (23) defines the penetrating hole (21), the second plastic portion (24) and the third plastic portion (25) cooperatively define a recessed groove (26), the recessed groove (26) is configured to support the flange portion (31), and two surfaces of the second plastic portion (24) opposite to each other in a thickness direction of the upper cover (10) respectively abut against the first surface (11) and the flange portion (31); the second plastic portion (24) defines the mounting hole (22), the supporting member (40) comprises a first supporting portion (41) and a second supporting portion (42) connected to each other, the first supporting portion (41) and the second supporting portion (42) are arranged in a thickness direction of the upper cover (10), a radial dimension of the first supporting portion (41) is greater than that of the second supporting portion (42), the first supporting portion (41) is located between the flange portion (31) and the second plastic portion (24) or between the second plastic portion (24) and the upper cover (10), and the second supporting portion (42) passes through the mounting hole (22).

11. The end cover assembly (100) of any one of claims 1 to 10, further comprising a sealing ring (50) and a pressure ring (60), wherein the sealing ring (50) is disposed on one side of the upper cover (10) facing away from the upper plastic member (20), the sealing ring (50) is sleeved on a periphery of the penetrating portion (32), the pressure ring (60) is disposed on one side of the sealing ring (50) facing away from the upper cover (10), and the pressure ring (60) is sleeved on the penetrating portion (32) and electrically connected to the penetrating portion (32); and the flange portion (31), the upper plastic member (20), the upper cover (10), and the pressure ring (60) cooperate to compress the sealing ring (50).

12. A battery cell (200), comprising:

   a housing (210);
   an end cover assembly (100) of any one of claims 1 to 11, wherein the end cover assembly (100) and the housing (210) cooperatively define a containing cavity (230); and
   an electrode assembly (240) disposed in the containing cavity (230), wherein the electrode assembly (240) is electrically connected to the terminal post (30) of the end cover assembly (100).

13. An energy-storage apparatus (300), comprising:

   a box (310) defining an accommodating cavity (311); and
   a plurality of battery cells (200) of claim 12,

**EP 4 769 680 A1**

wherein the plurality of battery cells (200) are accommodated in the accommodating cavity (311).

FIG. 1

FIG. 2

FIG. 3

FIG. 4

FIG. 5

FIG. 6

30

31

32

FIG. 7

100

30    20              30    20

B                              B

FIG. 8

100

30              I

20

FIG. 9

FIG. 10

FIG. 11

x

FIG. 12

FIG. 13

FIG. 14

FIG. 15

Europäisches
Patentamt
European
Patent Office
Office européen
des brevets

# EUROPEAN SEARCH REPORT

**Application Number**

EP 25 21 5906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 692 964 A (SHENZHEN EVERWIN PRECISION TECH CO LTD) 3 February 2023 (2023-02-03) | 1-4, 11-13 | INV. H01M50/103 H01M50/15 |
| A | * paragraph [0053] - paragraph [0062] * * paragraph [0067] - paragraph [0070] * * figures 3-7 * | 5-10 | H01M50/176 H01M50/188 H01M50/553 |
| A | CN 105 576 159 A (DONGGUAN AMPEREX TECH LTD; NINGDE AMPEREX TECHNOLOGY LTD) 11 May 2016 (2016-05-11) * the whole document * | 1-13 | |
| A | US 2019/296275 A1 (WANG CHENG [CN] ET AL) 26 September 2019 (2019-09-26) * the whole document * | 1-13 | |
| A | CN 105 576 160 A (DONGGUAN AMPEREX TECH LTD; NINGDE AMPEREX TECHNOLOGY LTD) 11 May 2016 (2016-05-11) * the whole document * | 1-13 | |

**TECHNICAL FIELDS SEARCHED (IPC)**

H01M

The present search report has been drawn up for all claims

| Place of search | Date of completion of the search | Examiner |
|---|---|---|
| Munich | 24 April 2026 | Lutoschkin, Eugen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 21 5906

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | | Publication date | Patent family member(s) | | Publication date |
|---|---|---|---|---|---|
| CN 115692964 | A | 03-02-2023 | NONE | | |
| CN 105576159 | A | 11-05-2016 | NONE | | |
| US 2019296275 | A1 | 26-09-2019 | CN | 106505163 A | 15-03-2017 |
| | | | US | 2019296275 A1 | 26-09-2019 |
| | | | WO | 2018099094 A1 | 07-06-2018 |
| CN 105576160 | A | 11-05-2016 | NONE | | |

EPO FORM P0459

For more details about this annex : see Official Journal of the European Patent Office, No. 12/82